# EUROPEAN PATENT SPECIFICATION

(11) **EP 4 378 074 B1**
(45) Date of publication and mention of the grant of the patent: **19.11.2025**
(21) Application number: 21765703.0
(22) Date of filing: 30.07.2021
(51) Int. Cl.: H02S 20/32, F24S 30/40

(54) **BEARING FOR SOLAR TRACKING SYSTEM**
LAGER FÜR EIN SONNENVERFOLGUNGSSYSTEM
PALIER POUR SYSTÈME DE SUIVI DU SOLEIL

(43) Date of publication of application: 05.06.2024
(73) Proprietor: Comal S.p.A., 01014 Montalto Di Castro VT (IT)
(72) Inventor: BALLETTI, Alfredo, 01100 Viterbo VT (IT)
(74) Representative: Manna, Sara
(86) International application number: PCT/IB2021/056970
(87) International publication number: WO 2023/007229

(56) References cited:
- US-A1- 2012 219 243
- US-A1- 2014 140 755
- US-A1- 2019 068 112

## Description

### FIELD OF THE INVENTION

The present invention relates to a bearing designed for use in the photovoltaic installation sector. More specifically, the bearing is configured to allow the rotation of a series of photovoltaic panels in the context of a single-axis solar tracking system.

### BACKGROUND

The withdrawal of non-renewable energy sources and the exploitation of renewable energy sources has become a priority objective in recent years, when sensitivity towards the environment has increased. One of the renewable energy sources of which we are witnessing an increasingly widespread use is solar energy.

Solar energy is transformed into electrical or thermal energy by means of devices such as photovoltaic panels, thermal solar panels or solar concentrators.

To make the most of the available energy content, such photovoltaic installations are to be oriented in such a way as to maintain an angle of incidence with solar rays of about 90°.

To this purpose, dedicated means are provided for the movement of photovoltaic installations during the day, to be able to vary the orientation thereof according to the (fictitious) movement of the sun from sunrise to sunset, commonly known as solar tracking systems or more simply as solar trackers (daylight trackers).

The solar tracker is an automatic mechanical device whose purpose is to guide photovoltaic panels or other types of installation in a direction orthogonal to the solar rays. Such a prior art device is disclosed in document US 2012/219243 A1.

Thanks to such devices, the exploitation of the captured solar energy, and therefore the efficiency of the installation, is maximized.

The disadvantage inherent in such devices is their complexity due to the numerous mechanical components involved, as well as the difficulty in carrying out maintenance, since they are often located in sites that are not easily accessible, or in any case where the presence of permanent operators is not expected.

### SUMMARY

The technical problem posed and solved by the present invention is therefore to provide a device for supporting and guiding the movement of photovoltaic panels with respect to a fixed support structure, which allows to overcome the problems above mentioned with reference to the known art.

This is achieved through a bearing as defined in independent claim 1. Furthermore, the invention provides a single-axis solar tracking system according to claim 11.

Secondary characteristics and particular embodiments of the object of the present invention are defined in the dependent claims.

The present invention primarily provides a bearing designed to realize a connection which ensures at least one degree of freedom between a fixed vertical support and a horizontal beam of a solar tracking system, preferably a metal beam. The horizontal beam is made integral with the photovoltaic panels, in order to allow the latter to be able to change their spatial orientation in order to optimize the exposure thereof.

According to a preferred variant of the invention, the bearing is composed of an external shell and an internal shell realized in a modular way, for a total of six components: two portions of external shell interlocking to each other, two portions of internal shell and two joining elements configured to allow the mechanical connection of the two portions of the internal shell.

In accordance with the aforementioned configuration, the internal shell is configured to be able to rotate with respect to the external shell, which it is directly in contact therewith, without the interposition of additional means to facilitate the rolling.

Advantageously, the bearing according to the present invention is configured not only to be oriented by rotating around the main axis of rotation, but further to self-align, thanks to the possibility of the internal shell to tilt, in use, with respect to the external shell, in accordance with an additional axis of rotation. Therefore, the aforementioned self-alignment should be understood as a rotation, having minimum excursion, around a second axis orthogonal to the main axis of rotation. To implement such functionality in a controlled manner, the external shell comprises guiding elements configured precisely to 'guide' and limit the misalignment of the internal shell, to prevent the same from escaping from its seat (created by the internal surfaces of the external shell which it is in direct contact therewith) and is no longer in contact with the external shell, causing the component to break.

Thanks to such configuration, the invention allows the rotation of the horizontal beam, and therefore of the photovoltaic panels, in any condition, without the need to actively carry out corrective operations on the structure after assembly. This implies that any misalignments of the moving parts do not affect the bearing efficiency, and any breakage of the motor or of the structural mechanical parts of the tracking system due to torques and frictions that would arise in the event of misalignment of the moving parts are avoided.

Furthermore, the guiding elements ensure that the interface between the internal shell and the external shell of the bearing, i.e. the surfaces where the sliding of the internal shell compared to the external shell, is protected from dust and any undesired particles.

According to preferred variants, the external shell is made of Polyamide 66, while the internal shell and the joining elements are made of POM (Polyacetal resin). Thanks to such choice of materials, the complete absence of lubricants is possible: the maintenance of the bearing is basically null.

The use of the aforementioned polymeric materials gives the bearing high functional performance, low coefficient of friction, low wear over time and therefore durability for the entire life of the solar panel being moved. Advantageously, the combination of the aforementioned materials and the particular conformation of the bearing allows to achieve:
- high resistance to dirt, thanks to the presence of guide elements preventing dust or foreign objects from entering;
- resistance to chemicals and atmospheric agents;
- ease of assembly and mounting: the joining elements are shaped to make the bearing easy to grasp and mount inside the tracker.

Furthermore, the dimensions of the bearing are preferably highly compact, and its overall conformation is suitable for being easily handled during assembly.

A further advantage achieved by the bearing according to the present invention is the ability to endure high loads.

As anticipated, the proposed bearing is designed to be integrated into single-axis solar tracking systems, which allow the photovoltaic panels to be moved following the daily motion of the sun from east to west, as detailed below.

Based on its construction characteristics, the tracker made according to the present invention is placed in the field of solar trackers which can offer the photovoltaic installation a freedom of uniaxial movement, more specifically of roll trackers.

This solar tracker, which is usually mounted on several support elements fixed directly into the ground, has the main axis of rotation oriented towards a north-south direction and rotates the beam (integral with the photovoltaic panels) in an east-west direction, following the sun along the celestial vault in its daily journey. The rotation range of the roll angle (east-west direction) may achieve up to 55°, or even 60°. This enables to increase the incidence angle of sunlight on the photovoltaic panels, where the incidence angle means the angle which a light beam, hitting a surface, forms with the perpendicular of the surface itself.

Advantageously, the proposed solar tracker system allows to reduce the reflection of sunlight and improve the overall efficiency of the photovoltaic panels.

### BRIEF DESCRIPTION OF THE FIGURES

In the following description, reference will be made to the attached Figures, in which:
- Figure 1 shows a perspective front view of a first preferred embodiment of a bearing according to the present invention;
- Figure 2 shows a perspective front view of the bearing of Figure 1, in an exploded configuration;
- Figures 3, 4 and 5 respectively show a front, side and bottom axonometric view of the bearing of Figure 1;
- Figure 6 shows a side view, in section, of the bearing of Figure 1;
- Figure 6a shows a side perspective view of a detail of the bearing according to the embodiment of Figure 1;
- Figure 7 shows a perspective front view of the bearing of Figure 1 in coupling configuration with a beam portion of a solar tracking system according to the present invention;
- Figure 8 shows a partial, front perspective, view of a preferred embodiment of a solar tracking system according to the present invention comprising the bearing of Figure 1;
- Figure 9 shows a plan view of a preferred embodiment of a photovoltaic plant according to the present invention comprising the solar tracking system of Figure 8.

The Figures above indicated are merely intended as non-limiting examples, and the thicknesses shown therein can be magnified.

### DETAILED DESCRIPTION OF THE INVENTION

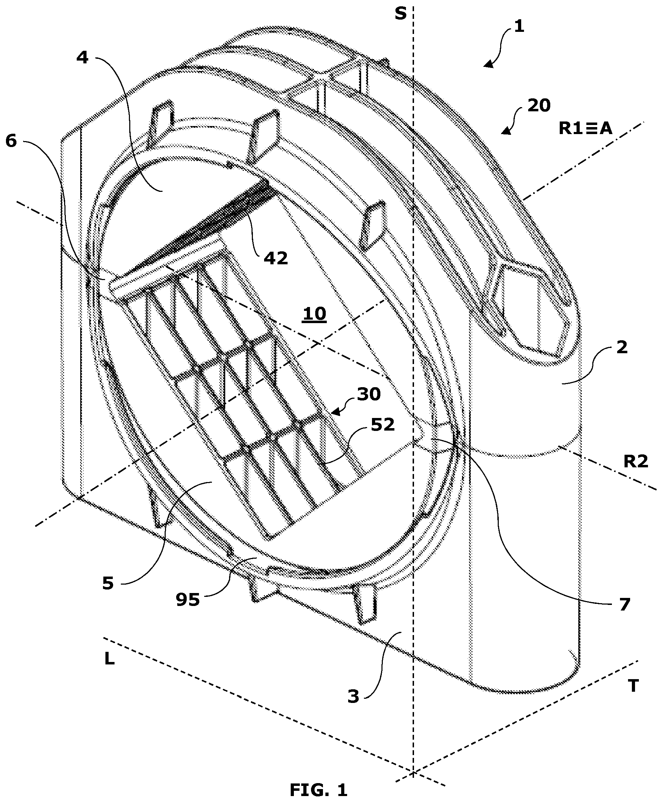

With reference to Figure 1, a preferred embodiment of a bearing according to the present invention is denoted by the reference number 1.

The bearing 1 substantially comprises an external shell 20 and an internal shell 30 inscribed with respect to the external shell 30.

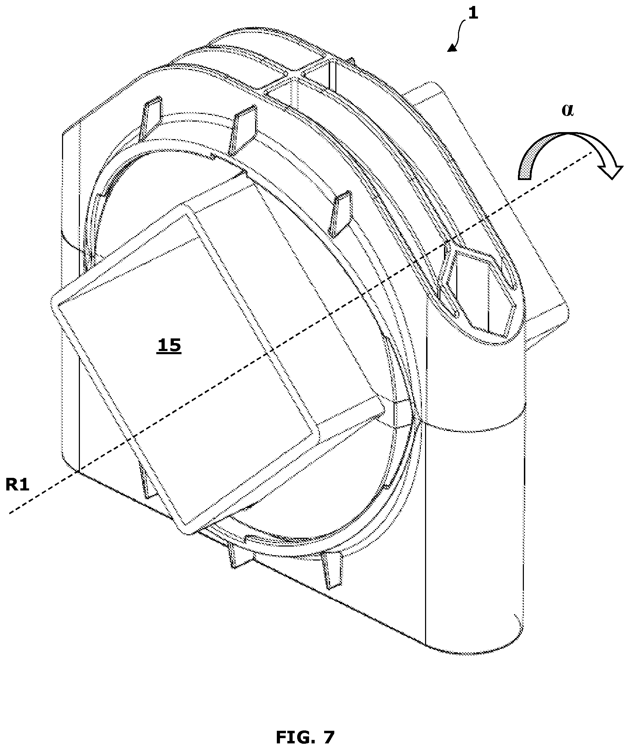

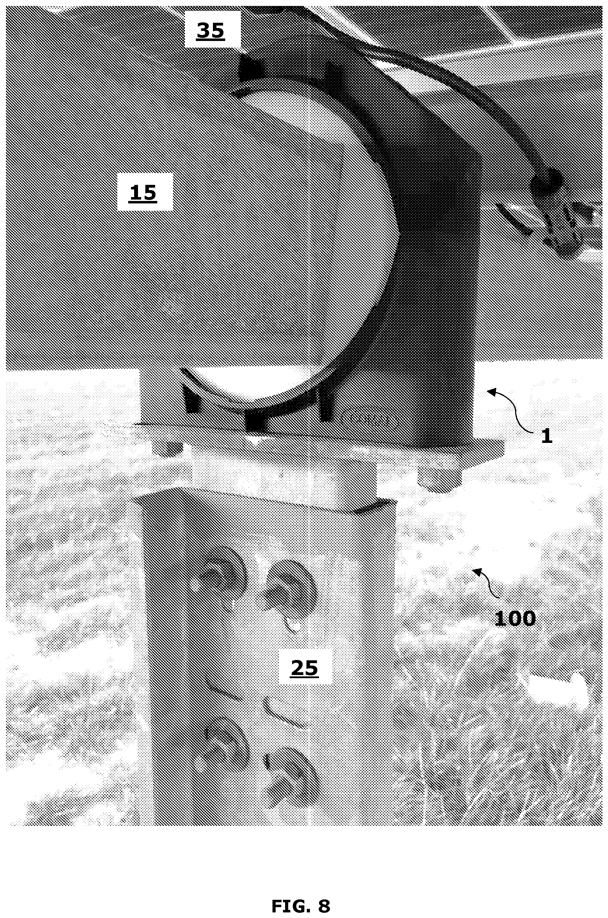

The internal shell 30 is configured to engage with a beam 15 (Figure 7), which is placed in rotation during use, while the external shell 20 comprises means for connection 8 to a support element 25, fixed during use, which for example may be a pole driven into the ground (Figure 8). Such means for connection 8 is configured to make external shell 20 integral with the support element 25.

Further referring to Figure 1, the two shells 20, 30 have maximum dimensions on a plane defined by a longitudinal direction L and a sagittal direction S; the thickness of bearing 1 is measured along a transversal direction T, which is the direction in accordance with which the beam 15 is inserted into the bearing 1.

The internal shell 30 is configured to rotate with respect to the external shell 20 in accordance with a first axis of rotation R1 parallel to the transversal direction T. Furthermore, the internal shell 30 bears a through hole shaped like a seat 10 for the housing of the beam 15, comprised within a solar tracking system 100 which will be discussed hereinafter.

The seat 10 develops in accordance with a main direction A which preferably coincides with the first axis of rotation R1, and even more preferably also coincides with an axis of central symmetry of the same seat 10, as well as of the internal shell 30.

As at least partially mentioned, bearing 1 is configured to allow a rotation of the beam 15 around the first axis of rotation R1. Such rotation can preferably achieve up to an angle α of maximum range with an amplitude equal to 55°, or rather 60°, in accordance with a clockwise rotation direction, as well as in the opposite direction, anticlockwise, around the axis R1 (Figure 7).

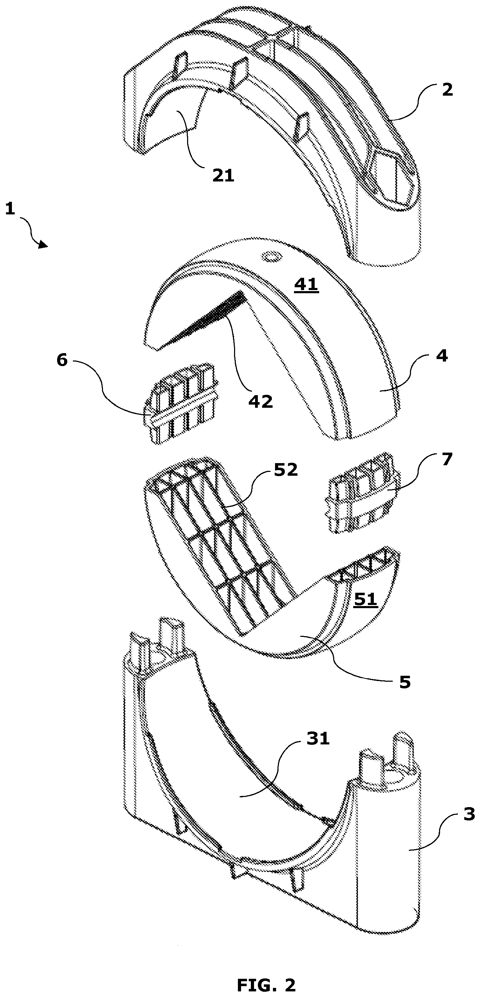

With reference to the preferred embodiment shown in Figure 2, the external shell 20 bears a first internal surface 21, 31 configured to abut directly on a second external surface 41, 51 of the internal shell 30. The first internal surface 21, 31 and the second external surface 41, 51 respectively have an annular conformation, in such a way that the second external surface 41, 51 can rotate on the first internal surface 21, 31.

In order for this to be possible while reducing friction between the surfaces, which are directly in contact, the choice of suitable materials for their realization is relevant.

Preferably, the external shell 20 is made of Polyamide 66, while the internal shell 30 is made of acetal resin (or polyacetal, also referred to as POM-C or POMC). The use of such materials, or different materials with the same properties, allows to completely avoid lubrication and to obtain excellent performance as well as high durability of the bearing 1, without the need for maintenance.

Going into more detail, polyamide 66 is a polymer reinforced 30% of weight by glass fiber, processed by injection molding from raw material in pellet format, heat stabilized and generally black in colour. The polymer is a high quality polyamide, preferably 100% recycled. This composition offers an excellent combination of thermal and mechanical properties, and furthermore has good moldability.

With reference to polyacetal resin, this is a copolymer processed by injection molding. It is a material with excellent anti-friction and anti-wear properties, chemical resistance, heat resistance stability, dimensional accuracy and moldability.

With particular reference to Figure 2, it is possible to note that the shells 20, 30 are preferably realized in a modular manner.

According to a preferred embodiment, the external shell 20 comprises a first top portion 2 and a first bottom portion 3 configured to mutually connect, jointly, at respective terminal end portions suitably shaped.

The bottom portion 3 further bears the means for connection 8 already mentioned, configured to achieve a mechanical coupling with a fixed support element 25 of the solar tracker system. In particular, such means for connection 8 can comprise three holes or seats suitably configured for the insertion of fixing screws with the fixed support element 25.

Furthermore, the means for connection 8 can be configured to connect the first top portion 2 and the first bottom portion 3 of the external shell 20 to each other. According to such embodiment, corresponding to that shown in the attached Figures, the means for connection 8 is configured as aligned holes, passing through both the first top portion 2 and the first bottom portion 3 of the shell 20.

With regards the internal shell 30, this preferably comprises a second top portion 4 and a second bottom portion 5, configured to connect to each other by interposing joining elements 6, 7. Also such joining elements 6, 7 are made of polyacetal resin.

More specifically, the seat 10 is realized by coupling the two second portions, top 4 and bottom 5 ones. In accordance with a preferred variant, the joining elements 6, 7 are configured to jointly connect to respective terminal end portions of the second top portion 4 and second bottom portion 5.

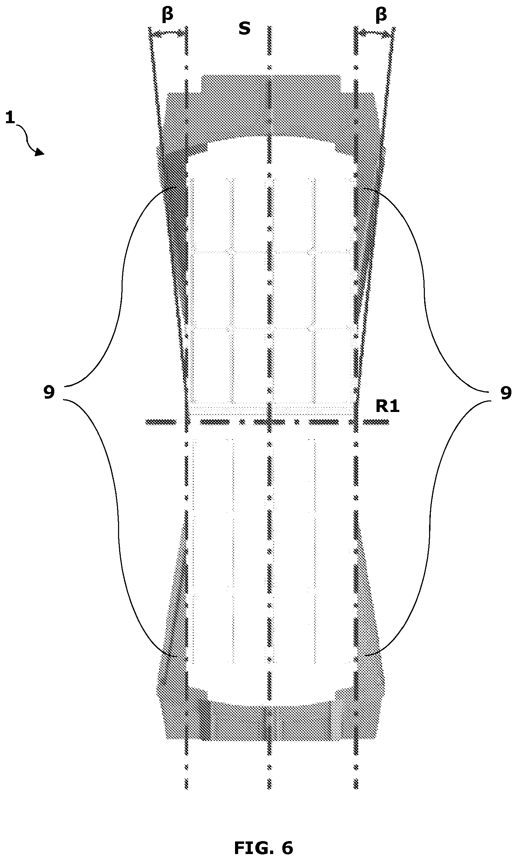

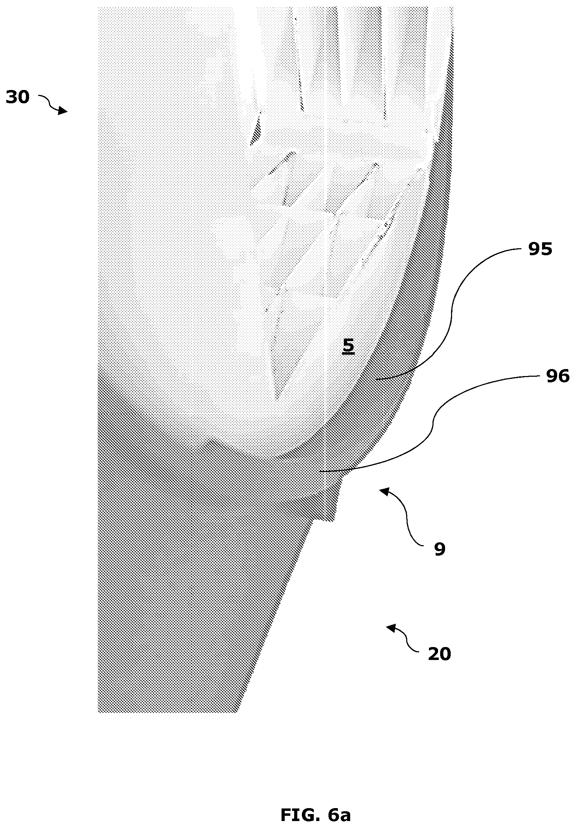

The joining elements 6, 7 are configured to elastically deform in a controlled manner, in such a way as to allow a tilting of the internal shell 30 with respect to the external shell 20 in accordance further with a second axis of rotation R2, which is parallel to the longitudinal direction L and orthogonal to the transversal direction T, as shown in Figure 6.

In particular, the coupling between the joining elements 6, 7 and the second top portion 4 and second bottom portion 5 is configured in such a way as to allow a tilting of each of the second top portion 4 and second bottom portion 5 in accordance with a second axis of rotation R2.

In this regard, at bottom and top portions (in accordance with the sagittal direction S which is vertical during use) of the external shell 20, guiding means 9 is preferably present, shown in detail in Figure 6a. Such means 9 is configured to allow the misalignment of the internal shell 30 with respect to the external shell 20, although avoiding to be excessive. In other words, the guiding means 9 is suitable for guiding and limiting the misalignment of the internal shell 30 with respect to the external shell 20.

To this purpose, such means 9 comprises a support portion 95 of the internal shell 30 and retention means 96.

The support portion 95 is realized as a localized prolongation or extension of the first internal surface 21, 31 towards the outside in accordance with the transversal direction T, whereon the second external surface 41, 51 of the internal shell 30 can slide. The support portion 95 is realized in continuity of material with the first internal surface 21, 31.

The retention means 96 comprises an edge or one or more teeth arranged at an external terminal region of this support portion 95, and delimit the extension thereof. The retention means 96 constitutes an obstacle to the movement of the internal shell 30 with respect to the support portion 95, with the aim of avoiding an excessive tilting of the internal shell 30 with respect to the external shell 20. The support portion 95 has such an extension that the external shell 30 can be misaligned with respect to the internal shell within a tolerance range preferably overall equal to about 9°.

Therefore, the guiding means 9 is configured to guide and limit the tilting of each of the second top portion 4 and second bottom portion 5 in accordance with the second axis of rotation R2. The tilting of the second top portion 4 and second bottom portion 5 can be at most equal to about 4.5°, clockwise or counter clockwise.

In particular, the coupling is configured to allow the internal shell 30 to rotate in accordance with the second axis of rotation R2 in order to obtain a tilting β with respect to a rest condition chosen as a reference, wherein the internal shell 30 is aligned to the sagittal direction. S.

In other words, in addition to the rotation around a main roll axis (R1), the bearing 1 geometry is configured to be self-aligning, i.e. it is realized to allow a further rotation around a transversal pitch axis (R2). The maximum range of rotation around the R2 axis is 9°, symmetrically distributed around the transversal plane, achieving a maximum excursion β equal to 4.5° per direction of rotation, as shown in Figure 6.

This option of movement around the axis R2 allows the bearing 1 to compensate for any misalignments that may occur in the structure of the solar tracking system, due for example to mounting inaccuracies, imperfect ground levelling, small deformations of the beam 15, thermal expansion/contraction of the metal of the beam 15, etc. Therefore, thanks to this technical characteristic, the bearing 1 ensures the perfect rotation of the photovoltaic module 35 supported in any condition.

With reference to the degrees of freedom realized by the bearing 1 according to the present invention, it is emphasised that preferred embodiments allow to implement a guide to the rotation of the beam 15 in accordance with the first axis of rotation R1, thanks to the sliding of the second external surface 41, 51 on the first internal surface 21, 31, in combination with a self-alignment of the bearing implemented by rotating the second top portion 4 and second bottom portion 5 around the second axis of rotation R2.

The correct position of the beam 15 is maintained by to the interference coupling between the external shell 20 and the internal shell 30. Such interference is obtained during the assembly of the bearing 1, when firstly the internal shell 30 is 'closed' on the beam 15, and then the external shell 'closes' to circumscribe and contain the internal shell 30, locking the same away. Evidently, the dimensions of the two shells 20, 30 are sized in order to obtain the interference which ensures the tightness of the coupling.

As can be further seen in Figures 1 and 2, according to a preferred variant of the invention, the structure of the internal shell 30 is of the reticular type, comprising a plurality of interspersed cavities, or better defined by, a plurality of walls or ribs.

Such structure is also present at a second internal surface 42, 52 of the internal shell 30 which defines the side walls of the seat 10, and which in particular is a discontinuous surface.

More specifically, in the second internal surface 42, 52, the area affected by the walls or ribs and which effectively provides the contact surface with the beam 15 when the latter is inserted in the seat 10, is less with respect to the cavities or voids present therein. Therefore, the area of the effective contact surface provided by the seat 10 is much less with respect to the area of the side walls defining the seat 10 itself, preferably it is less than half of the latter, even more preferably less than the 3/4 thereof.

With reference to the coupling of the bearing 1 with the beam 15 of the solar tracking system, it should be noted that the seat 10 realized from the internal shell 30 has a prismatic conformation, which reproduces the external profile of the bar 15 to achieve a shape coupling with the latter. In particular, the conformation of the seat 10 is such as to have the main development axis A coinciding with the first axis of rotation R1. According to a preferred embodiment, the seat 10 has a prismatic conformation, preferably quadrangular or squared (if viewed on the longitudinal L - sagittal S plane). Therefore, the second internal surface 42, 52 comprises a plurality of flat walls.

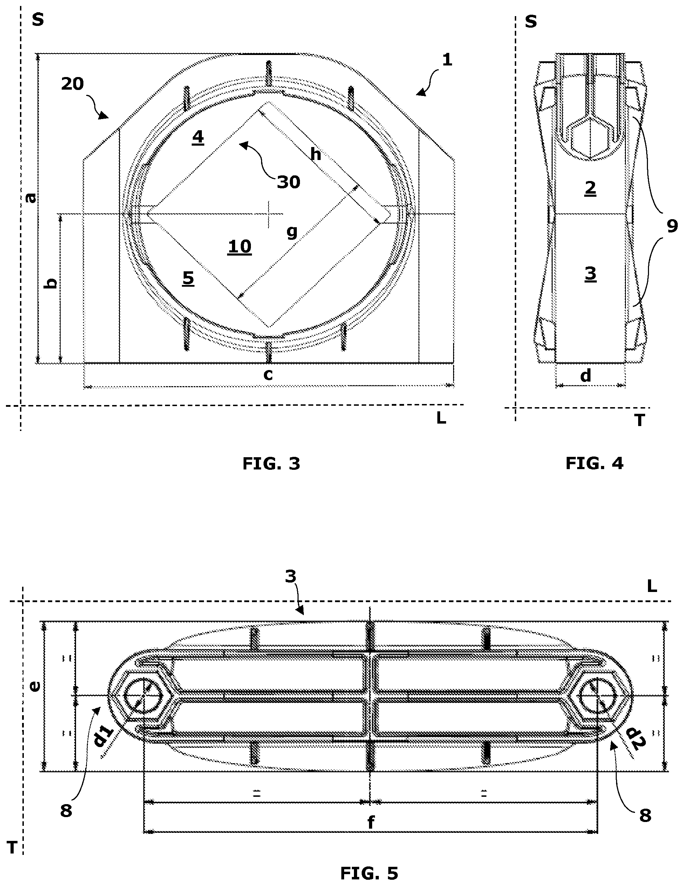

With reference to Figures 3, 4 and 5, some preferred dimensional parameters of bearing 1 are listed hereafter:

| | | | | |
|---|---|---|---|---|
| a = 233mm | b = 112mm | c = 261mm | d = 49mm | e = 79,8mm |
| f = 227mm | g = 121 mm | h = 121mm | d1 = 17mm | d2 = 17mm |

With further reference to such preferred embodiment, the preferred weights of the components of the bearing 1 are listed:
Top portion 2 of the external shell 20 = 0.278Kg
Top portion 4 of the internal shell 30 = 0.226Kg
Bottom portion 5 of the internal shell 30 = 0.226Kg
Joining elements 6, 7 (for each element) = 0.024Kg

As anticipated, the subject of the present invention is further a solar tracking system 100 (Figure 8) configured to support a plurality of photovoltaic panels preferably electrically connected in series, comprising a bearing 1 according to the above described. By way of example, one of the photovoltaic panels comprised in the proposed system is denoted by the numerical reference 35 in the attached Figures.

The 100 system comprises a beam 15 made integral with photovoltaic panels 35 and a fixed support element 25, which is driven into the ground or other support element during use. The beam 15 and the support 25 are made of metal, preferably of stainless steel.

It should be noted that, only for the sake of convenience, reference was made to individual beams, support elements, photovoltaic panels and bearings, although the system object of the invention may comprise a plurality of such elements. In general, in a system according to the invention a minimum of two beams and three fixed support elements, with a bearing for each beam-support element coupling, is provided.

The system 100, thanks to the presence of the bearing 1, is configured to support and allow a rotation of the beam 15 with respect to the fixed support element 25, to vary the orientation of the photovoltaic panels 35 with respect to the sun during the day, achieving all the advantages already described.

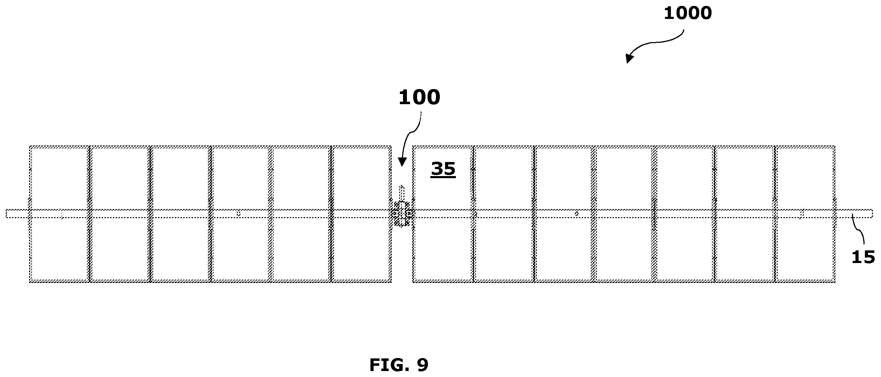

With reference to Figure 9, a further subject of the invention is a photovoltaic plant 1000 comprising a solar tracking system 100 according to what has already been described, and a plurality of photovoltaic panels 35.

Preferably, the photovoltaic plant 1000 of the invention comprises a plurality of photovoltaic panels 35 and a respective plurality of bearings 1. In particular, one bearing may be provided per seven/eight photovoltaic panels.

The 1000 system therefore further comprises a plurality of beams 15 and fixed support elements (or poles) 25, as already indicated.

The subjects of the present invention have been hitherto described with reference to its preferred embodiments, which can be freely combined to each other. It should be understood that other embodiments may exist pertaining to the same inventive core, each belonging to the protection scope of the claims set forth below.

## Claims

1. Bearing (1) for a solar tracking system (100),
said bearing (1) being configured to support a beam (15) integral with one or more photovoltaic panels (35) with respect to a fixed support element (25),
the beam (15) and the fixed support element (25) being comprised in the solar tracking system (100),
said bearing (1) comprising an external shell (20) and an internal shell (30) inscribed with respect to said external shell (20),
wherein:
said internal shell (30) is configured to be able to rotate with respect to said external shell (20) in accordance with a first axis of rotation (R1) and further bears a through hole shaped as a seat (10) for the housing of the beam (15), wherein said first axis of rotation (R1) is parallel to a transversal direction (T) with width of said bearing (1),
and said external shell (20) comprises means for connection (8) to the fixed support element (25),
wherein said external shell (20) bears a first internal surface (21, 31) configured to abut directly on a second external surface (41, 51) of said internal shell (30), said first internal surface (21, 31) and second external surface (41, 51) having respectively an annular conformation, so that said second external surface (41, 51) can rotate on said first internal surface (21, 31),
**characterized in that**
said internal shell (30) comprises a second top portion (4) and a second bottom portion (5) configured to connect to each other by interposition of joining elements (6, 7), said joining elements (6, 7) being configured to elastically deform in such a way as to allow a tilting of each said second top portion (4) and second bottom portion (5) in accordance with a second axis of rotation (R2) parallel to a longitudinal direction (L) and orthogonal to said transversal direction (T).

2. Bearing (1) according to claim 1, wherein said external shell (20) is made of Polyamide 66.

3. Bearing (1) according to one of the preceding claims, wherein said external shell (20) comprises a first top portion (2) and a first bottom portion (3) configured to jointly connect at terminal end portions thereof, wherein said bottom portion (3) comprises said means for connection (8).

4. Bearing (1) according to one of the preceding claims, wherein said internal shell (30) is made of polyacetal resin.

5. Bearing (1) according to one of the preceding claims, wherein said seat (10) develops in accordance with a main development axis (A) which coincides with said first axis of rotation (R1).

6. Bearing (1) according to one of the preceding claims, wherein said external shell (20) comprises a first top portion (2) and a first bottom portion (3) which comprise respective guiding means (9), configured to guide and limit the tilting of each of said second top portion (4) and second bottom portion (5) in accordance with said second axis of rotation (R2).

7. Bearing (1) according to one of the preceding claims, wherein the tilting of each of said second top portion (4) and second bottom portion (5) in accordance with said second axis of rotation (R2) is at most equal to about 4.5°.

8. Bearing (1) according to one of the preceding claims, wherein said joining elements (6, 7) are configured to jointly connect to respective terminal end portions of said second top portion (4) and second bottom portion (5).

9. Bearing (1) according to one of the preceding claims, wherein said joining elements (6, 7) are made of polyacetal resin.

10. Bearing (1) according to one of the preceding claims, wherein said seat (10) has a prismatic conformation.

11. Solar tracking system (100) configured to support a plurality of photovoltaic panels (35), comprising a beam (15) integral with the photovoltaic panels (35), a fixed support element (25) and a bearing (1) according to one of the preceding claims, said bearing (1) being configured to support and allow a rotation of said beam (15) with respect to said fixed support element (25).

12. Photovoltaic plant (1000) comprising a solar tracking system (100) according to the preceding claim and a plurality of photovoltaic panels (35).

## Patentansprüche

1. Lager (1) für ein Solarnachführsystem (100),
wobei das Lager (1) konfiguriert ist, um einen mit einem oder mehreren Photovoltaikmodulen (35) integrierten Träger (15) in Bezug auf ein festes Stützelement (25) zu stützen, wobei der Träger (15) und das feste Stützelement (25) in dem Solarnachführsystem (100) enthalten sind,
das Lager (1) umfassend eine Außenschale (20) und eine Innenschale (30), die in Bezug auf die Außenschale (20) einbeschrieben ist,
wobei:
die Innenschale (30) konfiguriert ist, um in der Lage zu sein, sich in Bezug auf die Außenschale (20) gemäß einer ersten Drehachse (R1) zu drehen, und ferner ein als ein Sitz (10) geformtes Durchgangsloch für die Aufnahme des Trägers (15) lagert, wobei die erste Drehachse (R1) parallel zu einer Querrichtung (T) mit einer Breite des Lagers (1) verläuft,
und die Außenschale (20) Mittel für eine Kopplung (8) mit dem festen Stützelement (25) umfasst,
wobei die Außenschale (20) eine erste Innenoberfläche (21, 31) lagert, die konfiguriert ist, um direkt an einer zweiten Außenoberfläche (41, 51) der Innenschale (30) anzuliegen, wobei die erste Innenoberfläche (21, 31) beziehungsweise die zweite Außenoberfläche (41, 51) eine ringförmige Gestaltung aufweisen, sodass sich die zweite Außenoberfläche (41, 51) auf der ersten Innenoberfläche (21, 31) drehen kann,
**dadurch gekennzeichnet, dass**
die Innenschale (30) einen zweiten oberen Abschnitt (4) und einen zweiten unteren Abschnitt (5) umfasst, die konfiguriert sind, um durch Einfügung von Verbindungselementen (6, 7) miteinander gekoppelt zu werden, wobei die Verbindungselemente (6, 7) konfiguriert sind, um sich in einer derartigen Weise elastisch zu verformen, um eine Neigung jedes des zweiten oberen Abschnitts (4) und des zweiten unteren Abschnitts (5) gemäß einer zweiten Drehachse (R2) parallel zu einer Längsrichtung (L) und orthogonal zu der Querrichtung (T) zu ermöglichen.

2. Lager (1) nach Anspruch 1, wobei die Außenschale (20) aus Polyamid 66 hergestellt ist.

3. Lager (1) nach einem der vorstehenden Ansprüche, wobei die Außenschale (20) einen ersten oberen Abschnitt (2) und einen ersten unteren Abschnitt (3) umfasst, die konfiguriert sind, um an Anschlussendabschnitten davon zusammengekoppelt zu werden, wobei der untere Abschnitt (3) die Mittel für die Kopplung (8) umfasst.

4. Lager (1) nach einem der vorstehenden Ansprüche, wobei die Innenschale (30) aus einem Polyacetalharz hergestellt ist.

5. Lager (1) nach einem der vorstehenden Ansprüche, wobei sich der Sitz (10) gemäß einer Hauptentwicklungsachse (A) entwickelt, die mit der ersten Drehachse (R1) zusammenfällt.

6. Lager (1) nach einem der vorstehenden Ansprüche, wobei die Außenschale (20) einen ersten oberen Abschnitt (2) und einen ersten unteren Abschnitt (3) umfasst, die jeweilige Führungsmittel (9) umfassen, die konfiguriert sind, um die Neigung jedes des zweiten oberen Abschnitts (4) und des zweiten unteren Abschnitts (5) gemäß der zweiten Drehachse (R2) zu führen und zu begrenzen.

7. Lager (1) nach einem der vorstehenden Ansprüche, wobei die Neigung jedes des zweiten oberen Abschnitts (4) und des zweiten unteren Abschnitts (5) gemäß der zweiten Drehachse (R2) höchstens etwa 4,5° beträgt.

8. Lager (1) nach einem der vorstehenden Ansprüche, wobei die Verbindungselementen (6, 7) konfiguriert sind, um mit den jeweiligen Anschlussendabschnitten des zweiten oberen Abschnitts (4) und des zweiten unteren Abschnitts (5) zusammengekoppelt zu werden.

9. Lager (1) nach einem der vorstehenden Ansprüche, wobei die Verbindungselemente (6, 7) aus Polyacetalharz hergestellt sind.

10. Lager (1) nach einem der vorstehenden Ansprüche, wobei der Sitz (10) eine prismatische Gestaltung aufweist.

11. Solarnachführsystem (100), das konfiguriert ist, um eine Vielzahl von Photovoltaikmodulen (35) zu stützen, umfassend einen mit den Photovoltaikmodulen (35) integrierten Träger (15), ein festes Stützelement (25) und ein Lager (1) nach einem der vorstehenden Ansprüche, wobei das Lager (1) konfiguriert ist, um den Träger (15) zu stützen und eine Drehung dieses in Bezug auf das feste Stützelement (25) zu ermöglichen.

12. Photovoltaikanlage (1000), umfassend ein Solarnachführsystem (100) nach dem vorstehenden Anspruch und eine Vielzahl von Photovoltaikmodulen (35).

## Revendications

1. Palier (1) pour un système de suivi solaire (100),
ledit palier (1) étant conçu pour supporter une poutre (15) solidaire d'un ou des panneaux photovoltaïques (35) par rapport à un élément de support fixe (25), la poutre (15) et l'élément de support fixe (25) faisant partie du système de suivi solaire (100),
ledit palier (1) comprenant une coquille externe (20) et une coquille interne (30) inscrite par rapport à ladite coquille externe (20),
dans lequel :
ladite coque interne (30) est conçue pour pouvoir tourner par rapport à ladite coque externe (20) selon un premier axe de rotation (R1) et porte en outre un trou traversant en forme de siège (10) pour le logement de la poutre (15), dans lequel ledit premier axe de rotation (R1) est parallèle à une direction transversale (T) avec la largeur dudit palier (1),
et ladite coque externe (20) comprend des moyens de connexion (8) à l'élément de support fixe (25),
dans lequel ladite coque externe (20) porte une première surface interne (21,31) conçue pour s'appuyer directement sur une seconde surface externe (41,51) de ladite coque interne (30), ladite première surface interne (21,31) et seconde surface externe (41,51) ayant respectivement une conformation annulaire, de sorte que ladite seconde surface externe (41,51) puisse tourner sur ladite première surface interne (21,31),
**caractérisé en ce que**
ladite coque interne (30) comprend une seconde partie supérieure (4) et une seconde partie inférieure (5) conçues pour se connecter l'une à l'autre par interposition d'éléments de jonction (6, 7), lesdits éléments de jonction (6, 7) étant conçus pour se déformer élastiquement de manière à permettre un basculement de chacune desdites seconde partie supérieure (4) et seconde partie inférieure (5) selon un second axe de rotation (R2) parallèle à une direction longitudinale (L) et orthogonale à ladite direction transversale (T).

2. Palier (1) selon la revendication 1, dans lequel ladite coque externe (20) est en polyamide 66.

3. Palier (1) selon l'une quelconque des revendications précédentes, dans lequel ladite coque externe (20) comprend une première partie supérieure (2) et une première partie inférieure (3) conçues pour se connecter conjointement à leurs extrémités, ladite partie inférieure (3) comprenant lesdits moyens de connexion (8).

4. Palier (1) selon l'une des revendications précédentes, dans lequel ladite coque principale interne (30) est constituée de résine polyacétalique.

5. Palier (1) selon l'une des revendications précédentes, dans lequel ledit siège (10) se développe selon un axe de développement principal (A) qui coïncide avec ledit premier axe de rotation (R1).

6. Palier (1) selon l'une des revendications précédentes, dans lequel ladite coque externe (20) comprend une première partie supérieure (2) et une première partie inférieure (3) qui comportent des moyens de guidage respectifs (9), conçus pour guider et limiter le basculement de chacune desdites seconde partie supérieure (4) et seconde partie inférieure (5) selon ledit second axe de rotation (R2).

7. Palier (1) selon l'une des revendications précédentes, dans lequel l'inclinaison de chacune desdites seconde partie supérieure (4) et seconde partie inférieure (5) selon ledit second axe de rotation (R2) est au plus égale à environ 4,5°.

8. Palier (1) selon l'une des revendications précédentes, dans lequel lesdits éléments de jonction (6, 7) sont conçus pour se connecter conjointement aux parties terminales respectives de la seconde partie supérieure (4) et de la seconde partie inférieure (5).

9. Palier (1) selon l'une des revendications précédentes, dans lequel lesdits éléments d'assemblage (6, 7) sont en résine polyacétalique.

10. Palier (1) selon l'une des revendications précédentes, dans lequel ledit siège (10) a une conformation prismatique.

11. Système de suivi solaire (100) conçu pour supporter une pluralité de panneaux photovoltaïques (35), comprenant une poutre (15) solidaire des panneaux photovoltaïques (35), un élément de support fixe (25) et un palier (1) selon l'une des revendications précédentes, ledit palier (1) étant conçu pour supporter et permettre une rotation de ladite poutre (15) par rapport audit élément de support fixe (25).

12. Installation photovoltaïque (1000) comprenant un système de suivi solaire (100) selon la revendication précédente et une pluralité de panneaux photovoltaïques (35).
